# EUROPEAN PATENT APPLICATION

(11) **EP 4 404 597 A1**
(43) Date of publication of application: **24.07.2024**
(21) Application number: 22883567.4
(22) Date of filing: 18.10.2022
(51) Int. Cl.: H04W 4/06, H04W 48/10, H04W 48/18

(54) **COMMUNICATION METHOD**

(30) Priority: 19.10.2021 US 202163257215 P
(71) Applicant: Kyocera Corporation, Kyoto-shi Kyoto 612-8501 (JP)
(72) Inventor: FUJISHIRO, Masato, Kyoto-shi, Kyoto 612-8501 (JP); CHANG, Henry, San Diego, California 92123 (US)
(74) Representative: Viering, Jentschura & Partner mbB Patent- und Rechtsanwälte
(86) International application number: PCT/JP2022/038738
(87) International publication number: WO 2023/068263

(57) **Abstract**

In a first aspect, a communication method is performed by a user equipment in a radio resource control (RRC) idle state or an RRC inactive state in a mobile communication system supporting a multicast and broadcast service (MBS). The communication method includes the steps of receiving system information (SI) scheduling information broadcast by a neighboring cell belonging to a desired MBS frequency associated with a desired MBS service, and prioritizing the desired MBS frequency over other frequencies in the cell reselection procedure when the SI scheduling information indicates that the neighboring cell has a capability of providing an MBS system information block.

## Description

### TECHNICAL FIELD

The present disclosure relates to a communication method used in a mobile communication system.

### BACKGROUND OF INVENTION

In 3rd Generation Partnership Project (3GPP) standards, technical specifications of New Radio (NR) being radio access technology of the fifth generation (5G) have been defined. NR has features such as high speed, large capacity, high reliability, and low latency, in comparison to Long Term Evolution (LTE) being radio access technology of the fourth generation (4G). In 3GPP, there have been discussions for establishing technical specifications of multicast and broadcast services (MBS) of 5G/NR (for example, see Non-Patent Document 1).

### CITATION LIST

### NON-PATENT LITERATURE

Non-Patent Document 1: 3GPP Contribution: RP-201038, "WID revision: NR Multicast and Broadcast Services"

### SUMMARY

5G/NR multicast and broadcast services are desired to provide enhanced services compared to 4G/LTE multicast and broadcast services.

In view of this, the present disclosure provides a communication method and a user equipment for enabling implementation of enhanced multicast and broadcast services.

In a first aspect, a communication method is performed by a user equipment in a radio resource control (RRC) idle state or an RRC inactive state in a mobile communication system supporting a multicast and broadcast service (MBS). The communication method includes a step of receiving system information (SI) scheduling information broadcast by a neighboring cell belonging to a desired MBS frequency associated with a desired MBS service, and a step of prioritizing the desired MBS frequency over other frequencies in the cell reselection procedure when the SI scheduling information indicates that the neighboring cell has a capability of providing an MBS system information block.

In a second aspect, a communication method is performed by a user equipment in a radio resource control (RRC) idle state or an RRC inactive state in a mobile communication system supporting a multicast and broadcast service (MBS). The communication method includes a step of selecting any one piece of information of broadcast information or higher layer information, the broadcast information being provided by broadcast from a network in an RRC layer, the higher layer information being provided from the network in a layer higher than the RRC layer, and a step of prioritizing a desired MBS frequency associated with a desired MBS service over other frequencies in a cell reselection procedure. Each of the broadcast information and the higher layer information is information indicating a correspondence relationship between an MBS service and a frequency. The step of prioritizing includes a step of prioritizing based on the one piece of information selected in the step of selecting.

In a third aspect, a communication method is performed by a user equipment in a radio resource control (RRC) idle state or an RRC inactive state in a mobile communication system supporting a multicast and broadcast service (MBS). The communication method includes a step of specifying at least one cell belonging to a desired MBS frequency associated with a desired MBS service, where a result of measurement on the at least one cell satisfies a predetermined criterion, and a step of prioritizing the desired MBS frequency over other frequencies in a cell reselection procedure when a user equipment determines that the specified cell broadcasts an MBS system information block.

In a fourth aspect, a communication method is performed by a user equipment in a radio resource control (RRC) idle state or an RRC inactive state in a mobile communication system supporting a multicast and broadcast service (MBS). The communication method includes a step of prioritizing, when a user equipment determines that at least one cell belonging to a desired MBS frequency associated with a desired MBS service broadcasts an MBS system information block, the desired MBS frequency over other frequencies in a cell reselection procedure, a step of specifying a candidate cell from the desired MBS frequency, based on a result of measurement on the desired MBS frequency, and a step of reselecting the candidate cell when the at least one cell includes the specified candidate cell.

In a fifth aspect, a communication method is performed by a user equipment in a radio resource control (RRC) idle state or an RRC inactive state in a mobile communication system supporting a multicast and broadcast service (MBS). The communication method includes a step of reselecting a cell belonging to a desired MBS frequency by prioritizing the desired MBS frequency associated with a desired MBS service over other frequencies in a cell reselection procedure, a step of determining whether the cell provides the desired MBS service, based on a multicast control channel transmitted from the cell, and a step of re-performing the cell reselection procedure when the step of determining determines that the cell does not provide the desired MBS service.

In a sixth aspect, a communication method is performed by a user equipment in a radio resource control (RRC) idle state or an RRC inactive state in a mobile communication system supporting a multicast and broadcast service (MBS). The communication method includes a step of receiving system information including information broadcast by a neighboring cell belonging to a desired MBS frequency associated with a desired MBS service, the information being regarding whether MBS service provision in the neighboring cell is restricted, and a step of prioritizing the desired MBS frequency over other frequencies in a cell reselection procedure in response to the system information indicating that the MBS service provision is not restricted, wherein the system information is a system information block type 1 or a master information block.

### BRIEF DESCRIPTION OF THE DRAWINGS

FIG. 1 is a diagram illustrating a configuration of a mobile communication system according to an embodiment.
FIG. 2 is a diagram illustrating a configuration of a user equipment (UE) according to an embodiment.
FIG. 3 is a diagram illustrating a configuration of a gNB (base station) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating an overview of MBS traffic delivery according to an embodiment.
FIG. 7 is a diagram illustrating delivery modes according to an embodiment.
FIG. 8 is a diagram illustrating an example of internal processing related to MBS reception of a UE 100 according to an embodiment.
FIG. 9 is a diagram illustrating another example of the internal processing related to the MBS reception of the UE 100 according to an embodiment.
FIG. 10 is a diagram illustrating an overview of a cell reselection procedure according to an embodiment.
FIG. 11 is a flowchart illustrating of a schematic flow of the cell reselection procedure according to an embodiment.
FIG. 12 is a diagram illustrating an operation example of a mobile communication system according to a first embodiment.
FIG. 13 is a diagram illustrating a first operation example according to a second embodiment.
FIG. 14 is a diagram illustrating a second operation example according to the second embodiment.
FIG. 15 is a flowchart illustrating an operation example of a cell reselection procedure according to a third embodiment.
FIG. 16 is a flowchart illustrating a cell reselection procedure according to a variation of the third embodiment.
FIG. 17 is a flowchart illustrating an operation example of a cell reselection procedure according to a fourth embodiment.
FIG. 18 is a flowchart indicating a cell reselection procedure according to a variation of the fourth embodiment.
FIG. 19 is a diagram illustrating a one-step configuration in a second delivery mode.

### DESCRIPTION OF EMBODIMENTS

A mobile communication system according to an embodiment is described with reference to the drawings. In the description of the drawings, the same or similar parts are denoted by the same or similar reference signs.

### First Embodiment

### Configuration of Mobile Communication System

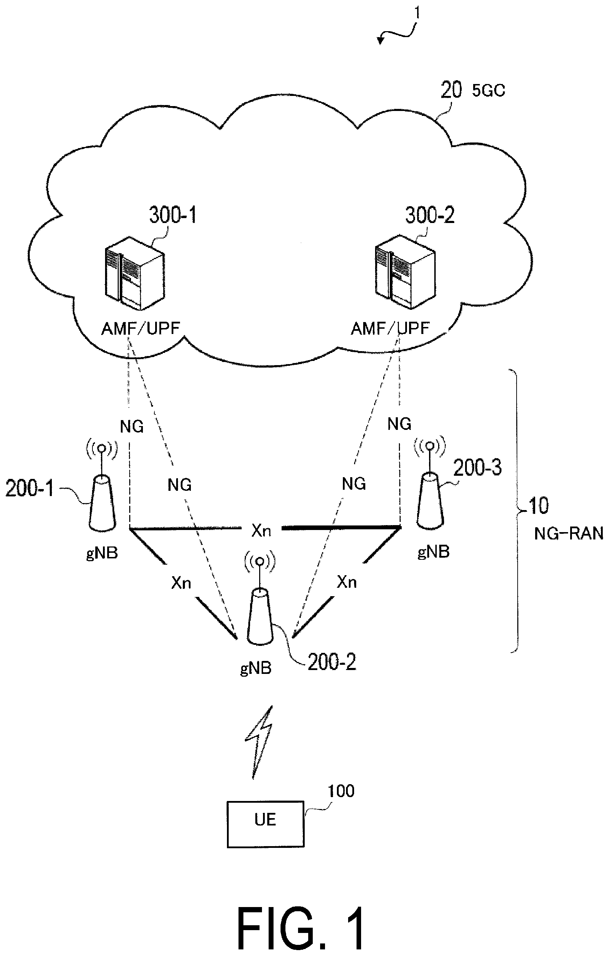

FIG. 1 is a diagram illustrating a configuration of a mobile communication system according to a first embodiment. The mobile communication system 1 complies with the 5th Generation System (5GS) of the 3GPP standard. The description below takes the 5GS as an example, but Long Term Evolution (LTE) system may be at least partially applied to the mobile communication system. A sixth generation (6G) system may be at least partially applied to the mobile communication system.

The mobile communication system 1 includes a User Equipment (UE) 100, a 5G radio access network (Next Generation Radio Access Network (NG-RAN)) 10, and a 5G Core Network (5GC) 20. The NG-RAN 10 may be hereinafter simply referred to as a RAN 10. The 5GC 20 may be simply referred to as a core network (CN) 20.

The UE 100 is a mobile wireless communication apparatus. The UE 100 may be any apparatus as long as the UE 100 is used by a user. Examples of the UE 100 include a mobile phone terminal (including a smartphone), a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter simply referred to as one "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

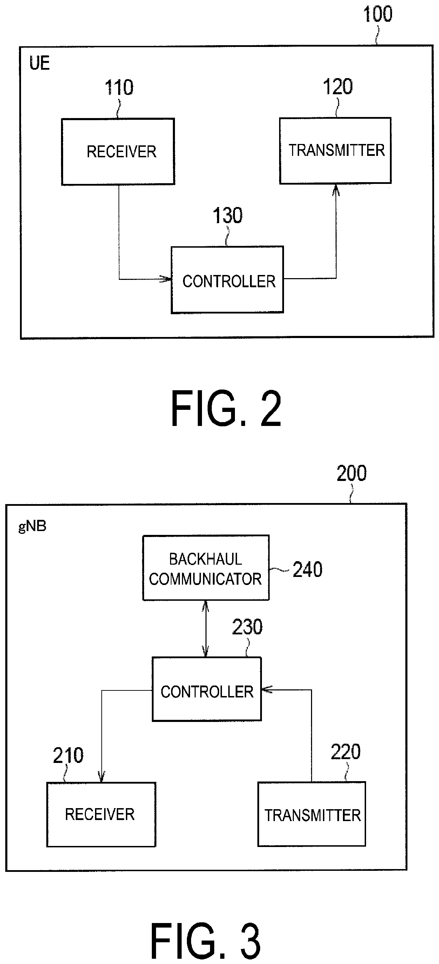

FIG. 2 is a diagram illustrating a configuration of the UE 100 (user equipment) according to the first embodiment. The UE 100 includes a receiver 110, a transmitter 120, and a controller 130. The receiver 110 and the transmitter 120 constitute a wireless communicator that performs wireless communication with the gNB 200.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control and processing in the UE 100. Such processing includes processing of respective layers to be described later. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

FIG. 3 is a diagram illustrating a configuration of the gNB 200 (base station) according to the first embodiment. The gNB 200 includes a transmitter 210, a receiver 220, a controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of control and processing in the gNB 200. Such processing includes processing of respective layers to be described later. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via an Xn interface which is an inter-base station interface. The backhaul communicator 240 is connected to the AMF/UPF 300 via a NG interface between a base station and the core network. Note that the gNB 200 may include a Central Unit (CU) and a Distributed Unit (DU) (i.e., functions are divided), and the two units may be connected via an F1 interface, which is a fronthaul interface.

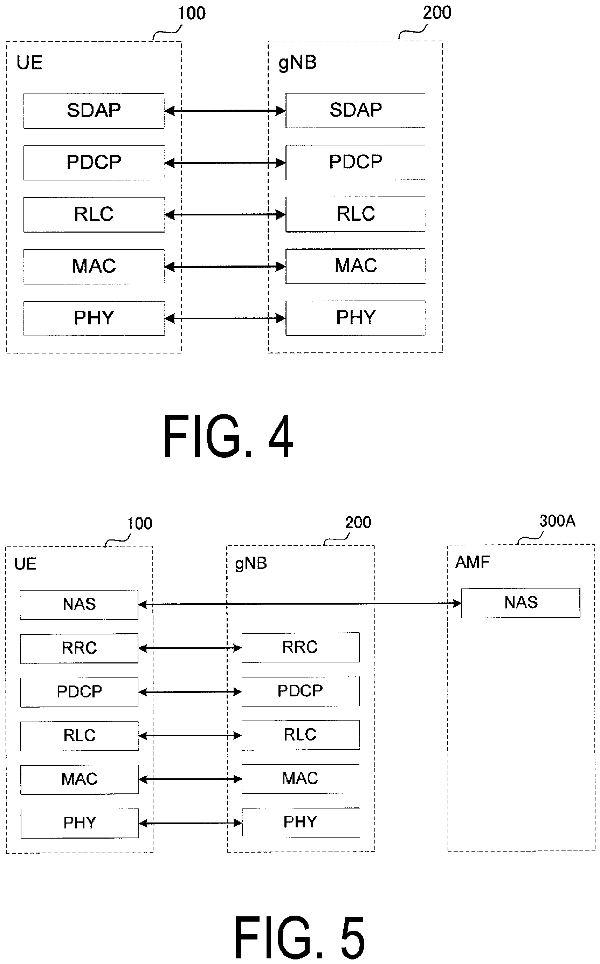

FIG. 4 is a diagram illustrating a configuration of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 blind decodes the PDCCH using a radio network temporary identifier (RNTI) and acquires successfully decoded DCI as DCI addressed to the UE 100. The DCI transmitted from the gNB 200 is appended with CRC parity bits scrambled by the RNTI.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection (RRC connection) between the RRC of the UE 100 and the RRC of the gNB 200 is present, the UE 100 is in an RRC connected state. When no connection (RRC connection) between the RRC of the UE 100 and the RRC of the gNB 200 is present, the UE 100 is in an RRC idle state. When the connection between the RRC of the UE 100 and the RRC of the gNB 200 is suspended, the UE 100 is in an RRC inactive state.

The NAS layer which is positioned upper than the RRC layer performs session management, mobility management, and the like. NAS signaling is transmitted between the NAS layer of the UE 100 and the NAS layer of an AMF 300A. Note that the UE 100 includes an application layer other than the protocol of the radio interface. A layer lower than the NAS layer is referred to as an AS layer.

### Overview of MBS

An overview of the MBS according to the first embodiment will be described. The MBS is a service in which the NG-RAN 10 can provide broadcast or multicast, i.e., Point To Multipoint (PTM) data transmission to the UE 100. Assumed use cases (service types) of the MBS include public safety communication, mission critical communication, Vehicle to Everything (V2X) communication, IPv4 or IPv6 multicast delivery, Internet Protocol TeleVision (IPTV), group communication, and software delivery.

A broadcast service provides a service to every UE 100 within a particular service area for an application not requiring highly reliable QoS. An MBS session used for the broadcast service is referred to as a broadcast session.

A multicast service provides a service not to every UE 100, but to a group of UEs 100 participating in the multicast service (multicast session). An MBS session used for the multicast service is referred to as a multicast session.

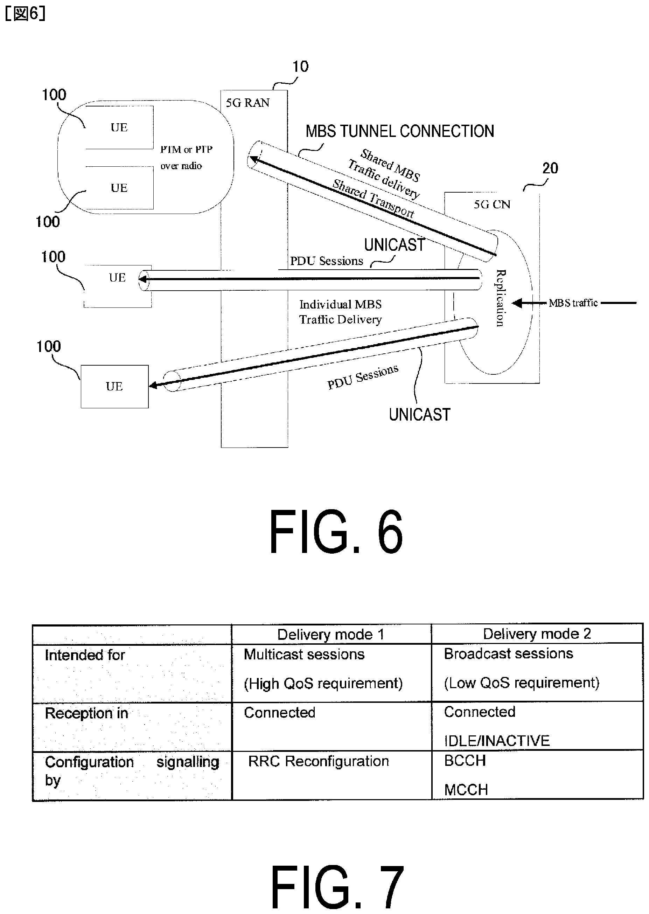

FIG. 6 is a diagram illustrating an overview of MBS traffic delivery according to the first embodiment.

MBS traffic (MBS data) is delivered from a single data source (application service provider) to a plurality of UEs. The 5G CN (5GC) 20, which is a 5G core network, receives the MBS data from the application service provider and performs Replication of the MBS data to deliver the resultant.

From the perspective of the 5GC 20, two multicast delivery methods are possible: 5GC Shared MBS Traffic delivery and 5GC Individual MBS Traffic delivery.

In the 5GC individual MBS traffic delivery method, the 5GC 20 receives a single copy of MBS data packets and delivers individual copies of these MBS data packets to the individual UEs 100 via PDU sessions of the individual UEs 100. Thus, one PDU session for each UE 100 needs to be associated with a multicast session.

In the 5GC shared MBS traffic delivery method, the 5GC 20 receives a single copy of MBS data packets and delivers the single copy of the MBS packets to a RAN node (i.e., the gNB 200). The gNB 200 receives the MBS data packets via MBS tunnel connection, and delivers those to one or more UEs 100.

From the perspective of the RAN (5G RAN) 10, two delivery methods are possible for radio transmission of the MBS data in the 5GC shared MBS traffic delivery method: a Point-to-Point (PTP) delivery method and a Point-to-Multipoint (PTM) delivery method. PTP means unicast, and PTM means multicast and broadcast.

In the PTP delivery method, the gNB 200 wirelessly delivers the individual copies of the MBS data packets to the individual UEs 100. On the other hand, in the PTM delivery method, the gNB 200 wirelessly delivers the single copy of the MBS data packets to a group of the UEs 100. The gNB 200 can dynamically decide whether to use the PTM or PTP delivery method as a method for delivering the MBS data to one UE 100.

The PTP and PTM delivery methods are mainly related to the user plane. Modes for controlling the MBS data delivery include two delivery modes: a first delivery mode and a second delivery mode.

FIG. 7 is a diagram illustrating the delivery modes according to the first embodiment.

The first delivery mode (Delivery mode 1 (DM1)) is a delivery mode that can be used by the UE 100 in the RRC connected state, and is a delivery mode for high QoS requirements. The first delivery mode is used for multicast sessions among MBS sessions. Note that the first delivery mode may be used for broadcast sessions. The first delivery mode may be available to the UE 100 in the RRC idle state or the RRC inactive state.

MBS reception configuration in the first delivery mode is performed through UE-dedicated signaling. For example, the MBS reception configuration in the first delivery mode is performed through an RRC Reconfiguration message (or an RRC Release message), which is an RRC message unicast from the gNB 200 to the UE 100.

The MBS reception configuration includes MBS traffic channel configuration information (hereinafter referred to as "MTCH configuration information") about configuration of an MBS traffic channel carrying MBS data. The MTCH configuration information includes MBS session information (including an MBS session identifier described later) relating to an MBS session and scheduling information of an MBS traffic channel corresponding to the MBS session. The scheduling information of an MBS traffic channel may include discontinuous reception (DRX) configuration of the MBS traffic channel. The discontinuous reception configuration may include at least one parameter of a timer value (On Duration Timer) for defining an on-period (On Duration: reception period), a timer value (Inactivity Timer) for extending the on-period, a scheduling interval or a DRX cycle (Scheduling Period, DRX Cycle), an offset value (Start Offset, DRX Cycle Offset) of a start subframe for scheduling or a DRX cycle, a start delay slot value (Slot Offset) of an on-period timer, a timer value (Retransmission Timer) for defining a maximum time until retransmission, and a timer value (HARQ RTT Timer) for defining a minimum interval until DL assignment of HARQ retransmission.

Note that the MBS traffic channel is a type of logical channel and may be referred to as an MTCH. The MBS traffic channel is mapped to a downlink shared channel (Down Link-Shared CHannel (DL-SCH)) being a type of transport channel.

The second delivery mode (Delivery mode 2 (DM2)) is a delivery mode that can be used not only by the UE 100 in the RRC connected state, but also by the UE 100 in the RRC idle state or the RRC inactive state, and is a delivery mode for low QoS requirements. The second delivery mode is used for broadcast sessions among MBS sessions. However, the second delivery mode may also be applicable to multicast sessions.

An MBS reception configuration in the second delivery mode is performed through broadcast signaling. For example, the MBS reception configuration in the second delivery mode is performed using a logical channel transmitted from the gNB 200 to the UE 100 through broadcast, for example, a broadcast control channel (BCCH) and/or a multicast control channel (MCCH). The UE 100 can receive the BCCH and the MCCH, using a dedicated RNTI defined in technical specifications in advance, for example. The RNTI for BCCH reception may be an SI-RNTI, and the RNTI for MCCH reception may be an MCCH-RNTI.

In the second delivery mode, the UE 100 may receive the MBS data in the following three procedures. Firstly, the UE 100 receives the MCCH configuration information in an MBS system information block (MBS-SIB) transmitted on the BCCH from the gNB 200. Secondly, the UE 100 receives the MCCH from the gNB 200, based on the MCCH configuration information. On the MCCH, MTCH configuration information is transmitted. The MCCH may include neighboring cell information indicating whether the currently provided MBS session is also provided in a neighboring cell. Thirdly, the UE 100 receives the MTCH (MBS data), based on the MTCH configuration information. The MTCH configuration information and/or the MCCH configuration information may be hereinafter referred to as the MBS reception configuration. In the following embodiments, a case where the UE 100 receives an MBS session delivered in the second delivery mode is mainly described.

In the first delivery mode and the second delivery mode, the UE 100 may receive the MTCH, using a group RNTI (G-RNTI) assigned from the gNB 200. The G-RNTI corresponds to an RNTI for MTCH reception. The G-RNTI may be included in the MBS reception configuration (MTCH configuration information).

The network can provide different MBS services for different MBS sessions. The MBS session is identified by at least one selected from the group consisting of a Temporary Mobile Group Identity (TMGI), a source-specific IP multicast address (which consists of a source unicast IP address, such as an application function and an application server, and an IP multicast address indicating a destination address), a session identifier, and a G-RNTI. At least one selected from the group consisting of the TMGI, the source specific IP multicast address, and the session identifier is referred to as an MBS session identifier. The TMGI, the source-specific IP multicast address, the session identifier, and the G-RNTI are collectively referred to as MBS session information.

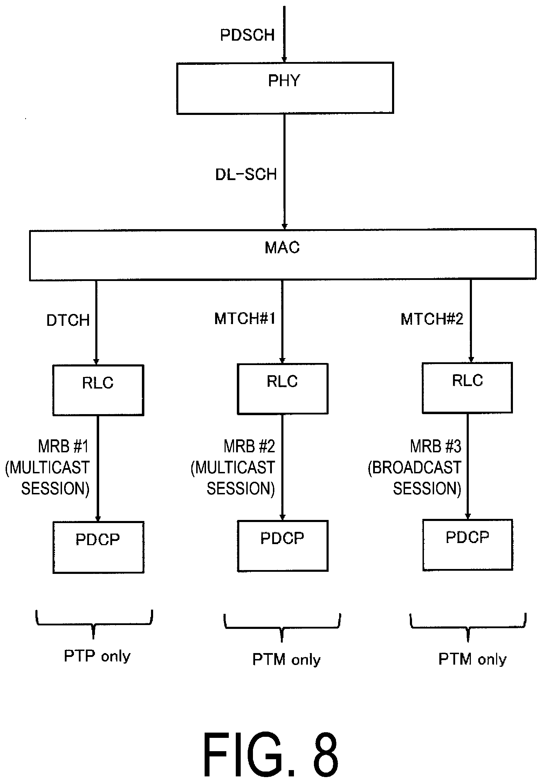

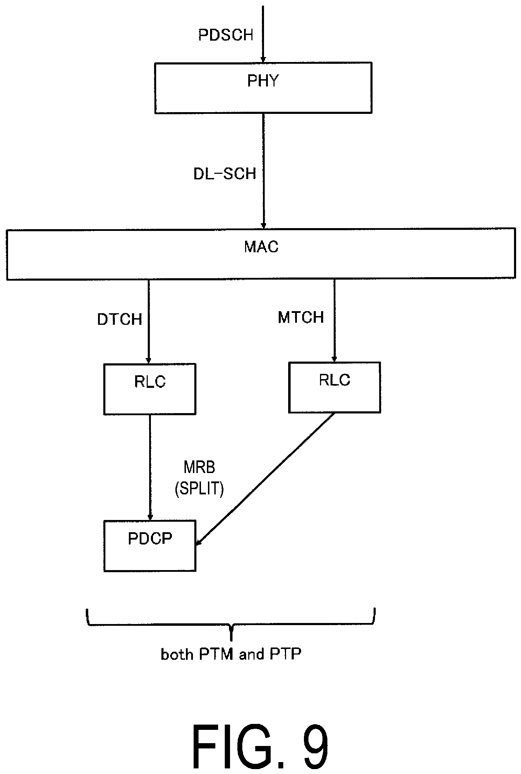

FIG. 8 is a diagram illustrating an example of internal processing related to the MBS reception of the UE 100 according to the first embodiment. FIG. 9 is a diagram illustrating another example of the internal processing related to the MBS reception of the UE 100 according to the first embodiment.

One MBS radio bearer (MRB) is one radio bearer carrying a multicast session or a broadcast session. That is, a multicast session may be associated with an MRB or a broadcast session may be associated with an MRB.

The MRB and the corresponding logical channel (e.g., MTCH) are configured for the UE 100 from the gNB 200 through RRC signaling. An MRB configuration procedure may be separated from a data radio bearer (DRB) configuration procedure. In the RRC signaling, one MRB can be configured with "PTM only", "PTP only", or "both PTM and PTP". Such a bearer type of the MRB may be changed by the RRC signaling.

FIG. 8 illustrates an example in which a multicast session and a dedicated traffic channel (DTCH) are associated with an MRB #1, a multicast session and an MTCH #1 are associated with an MRB #2, and a broadcast session and an MTCH #2 are associated with an MRB #3. That is, the MRB #1 is an MRB with PTP only, the MRB #2 is an MRB with PTM only, and the MRB #3 is an MRB with PTM only. Note that the DTCH is scheduled using a cell RNTI (C-RNTI). The MTCH is scheduled using the G-RNTI.

The PHY layer of the UE 100 processes user data (received data) received on the PDSCH, which is one of physical channels, and routes the processed user data to the downlink shared channel (DL-SCH), which is one of transport channels. The MAC layer (MAC entity) of the UE 100 processes the data received on the DL-SCH and routes the received data to a corresponding logical channel (corresponding RLC entity) based on a logical channel identifier (LCID) included in the header (MAC header) included in the received data.

FIG. 9 illustrates an example in which the DTCH and the MTCH are associated with the MRB associated with the multicast session. Specifically, one MRB is split into two legs, one leg is associated with the DTCH, and the other leg is associated with the MTCH. The two legs are combined at the PDCP layer (PDCP entity). That is, the MRB is an MRB with both PTM and PTP. Such an MRB may be referred to as a split MRB.

### Overview of Cell Reselection Procedure

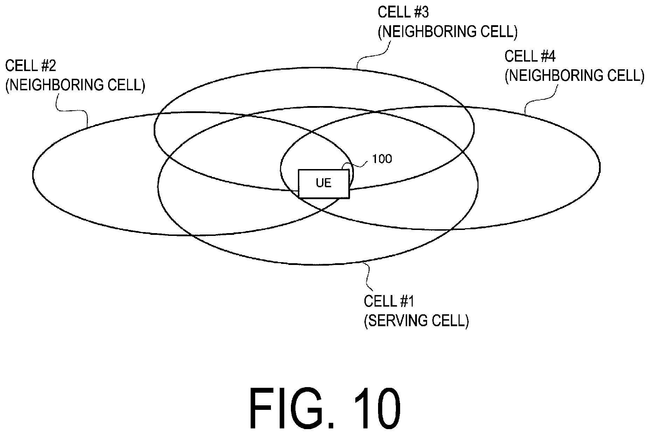

An overview of a cell reselection procedure is described. FIG. 10 is a diagram illustrating the overview of the cell reselection procedure.

The UE 100 in the RRC idle state or the RRC inactive state performs the cell reselection procedure with moving to migrate from a current serving cell (cell #1) to a neighboring cell (any one of cells #2 to #4). To be more specific, the UE 100 specifies a neighboring cell to be camped by the UE 100 through the cell reselection procedure and reselects the specified neighboring cell. When the frequency (carrier frequency) is the same between the current serving cell and the neighboring cell is referred to as an intra-frequency, and when the frequency (carrier frequency) is different between the current serving cell and the neighboring cell is referred to as an inter-frequency. The current serving cell and the neighboring cell may be managed by the same gNB 200. The current serving cell and the neighboring cell may be managed by the gNBs 200 different from each other.

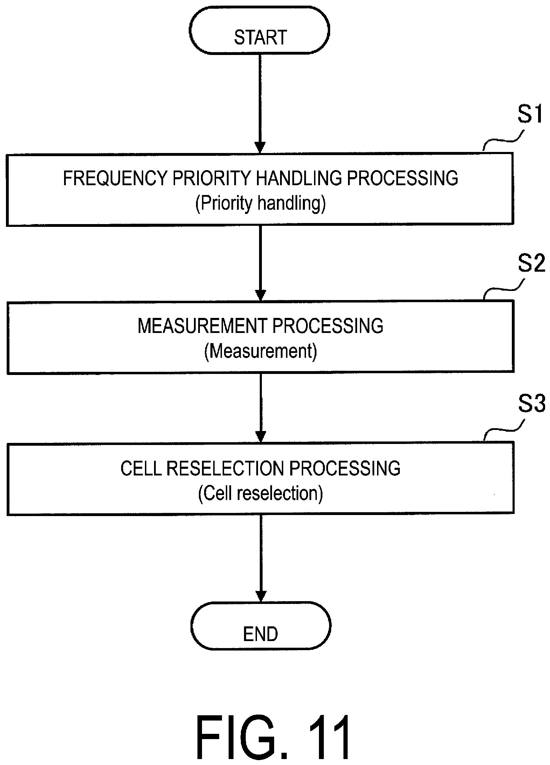

FIG. 11 is a flowchart illustrating a schematic flow of the cell reselection procedure.

In step S1, the UE 100 performs frequency priority handling processing based on frequency-specific priorities specified by the gNB 200, for example, by way of a system information block or an RRC release message. To be more specific, the UE 100 manages the frequency priority designated by the gNB 200 for each frequency. As will be described in more detail below, the UE 100 being receiving or interested in receiving the MBS service may prioritize the MBS frequency associated with that MBS service over other frequencies.

Note that the term "MBS service" refers to, but is not limited to, an MBS session and may also refer to an MBS service area. In a manner the same as and/or similar to the above, the term "MBS service identifier" refers to, but is not limited to, an MBS session identifier (e.g., TMGI) and may also refer to an MBS service area identifier (MBS SAI). The term "frequency" refers to, but is not limited to, a carrier frequency, and may also refer to a cell. In the following, the MBS service that the UE 100 is receiving or is interested in receiving is referred to as a "desired MBS service" and a frequency associated with the desired MBS service is referred to as a "desired MBS frequency".

In step S2, the UE 100 performs measurement processing of measuring radio qualities of the serving cell and each of the neighboring cells. The UE 100 measures reception powers and reception qualities of reference signals transmitted by the serving cell and each of the neighboring cells, to be more specific, cell defining-synchronization signal and PBCH block (CD-SSB). For example, the UE 100 measures always the radio quality for a frequency with a priority higher than the priority of the frequency of the current serving cell. For a frequency with a priority equal to or lower than the priority of the frequency of the current serving cell, when the radio quality of the current serving cell is lower than a predetermined quality, the UE 100 measures the radio quality for a frequency with a priority equal to or lower than the priority of the frequency of the current serving cell.

In step S3, the UE 100 performs the reselection processing of reselecting a cell on which the UE 100 camps based on a result of the measurement in step S2. For example, the UE 100 may perform cell reselection to a neighboring cell when a priority of a frequency of the neighboring cell is higher than the priority of the current serving cell and when the neighboring cell satisfies a predetermined quality standard (i.e., a minimal quality standard) for a predetermined period of time. When the priories of the frequencies of the neighboring cells are the same as the priority of the current serving cell, the UE 100 may rank the radio qualities of the neighboring cells to perform cell reselection to the neighboring cell ranked higher than a rank of the current serving cell for a predetermined period of time. When the priority of the frequency of the neighboring cell is lower than the priority of the current serving cell, and when the radio quality of the current serving cell is lower than a certain threshold value and the radio quality of the neighboring cell is continuously higher than another threshold value for a predetermined period of time, the UE 100 may perform cell reselection to the neighboring cell.

### Operation of Mobile Communication System

As described above, the UE 100 being receiving or interested in receiving the MBS prioritizes the desired MBS frequency associated with the desired MBS service over other frequencies in the frequency priority handling processing. For example, the UE 100 decides that the frequency priority of the desired MBS frequency is the highest priority (e.g., the priority higher than any priority that the network may specify). This makes the desired MBS service be easily continuously provided to the UE 100.

Currently, it is assumed that the UE 100 prioritizes the desired MBS frequency over other frequencies on condition that the neighboring cell belonging to the desired MBS frequency is providing the MBS SIB (i.e. the SIB carrying the MCCH configuration). However, unlike the minimum system information (Minimum SI) that each cell always broadcasts, specifically, the master information block (MIB) and the system information block type 1 (SIB 1), the MBS SIB may be an On-demand SI that is broadcast in response to a request from the UE 100. Therefore, even a cell having a capability of providing the MBS SIB by broadcast does not necessarily provide the MBS SIB.

Therefore, when the neighboring cell belonging to the desired MBS frequency is required to provide the MBS SIB as the condition to prioritize the desired MBS frequency over other frequencies, the UE 100 may need to request each neighboring cell to transmit the MBS SIB for the cell reselection procedure. Such an operation increases power consumption of the UE 100 and MBS reception delay, and is not efficient.

In the first embodiment, the UE 100 in the RRC idle state or the RRC inactive state receives system information (SI) scheduling information broadcast by the neighboring cell belonging to the desired MBS frequency associated with the desired MBS service. The SI scheduling information is an information element included in the SIB1. The UE 100 prioritizes the desired MBS frequency over other frequencies in the cell reselection procedure when the SI scheduling information indicates that the neighboring cell has the capability of providing the MBS SIB.

Specifically, in the first embodiment, the UE 100 performs the frequency priority handling processing in accordance with whether the neighboring cell has the capability of providing the MBS SIB, rather than whether the neighboring cell broadcasts the MBS SIB. To be more specific, when the neighboring cell belonging to the desired MBS frequency does not broadcast the MBS SIB but the neighboring cell has the capability of providing the MBS SIB, the UE 100 prioritizes the desired MBS frequency over other frequencies in the cell reselection procedure. This makes the cell reselection procedure more efficient because the UE 100 does not need to request each neighboring cell to transmit an MBS SIB.

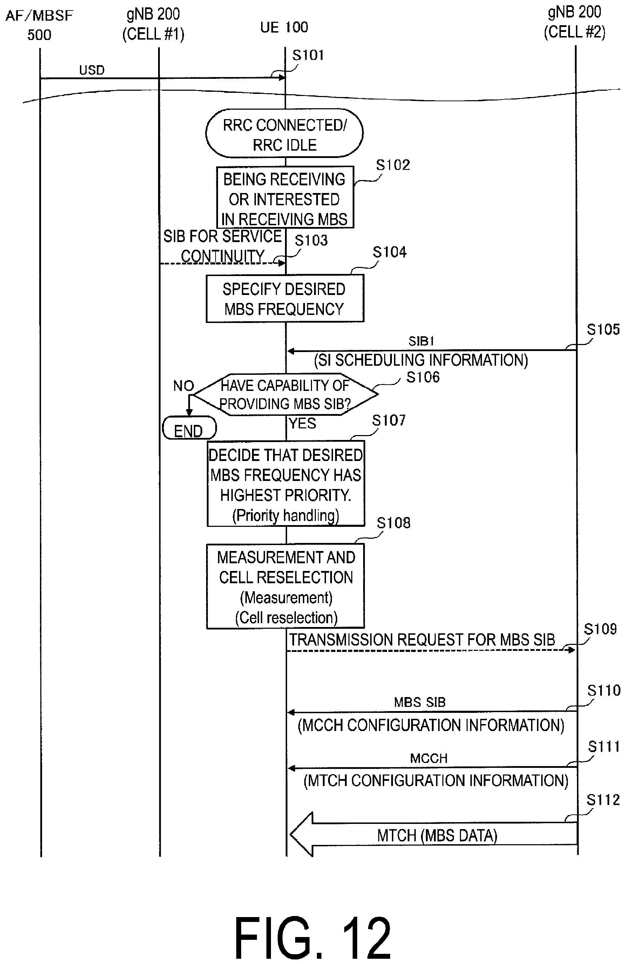

FIG. 12 is a diagram illustrating an operation example of the mobile communication system 1 according to the first embodiment.

In step S101, an application function (AF)/multicast and broadcast service function (MBSF) 500 provides a USD to the UE 100. The USD is an example of higher layer information provided from the network in a layer (specifically, an application layer) higher than the RRC layer. The USD may be referred to as service announcement information. The USD may be information indicating a correspondence relationship between an MBS service and a frequency. The USD may include at least one set of an MBS service identifier and frequency information. The USD may include at least one selected from the group consisting of an MBS session identifier for identifying an MBS session, information of start and end times of the MBS session, an SAI indicating an MBS service area in which the MBS session is provided, and information of a frequency in which the MBS session is provided. The UE 100 stores the USD provided from the AF/MBSF 500.

In step S102, the UE 100 in the RRC idle state or the RRC inactive state is receiving or interested in receiving the MBS.

In step S103, the UE 100 may receive an SIB for service continuity from the cell #1, which is the current serving cell. The SIB for service continuity is an SIB of a type different from the MBS SIB and is an example of broadcast information provided by broadcast from the network in the RRC layer. The SIB for service continuity may be information indicating a correspondence relationship between an MBS service and a frequency. For example, the SIB for service continuity may include at least one set of an MBS service identifier and frequency information.

In step S104, the UE 100 specifies the desired MBS frequency associated with the desired MBS service based on the USD (higher layer information) provided in step S101 or the SIB for service continuity (broadcast information) provided in step S103.

In step S105, the UE 100 receives the SIB1 from the neighboring cell #2 belonging to the desired MBS frequency specified in step S104.

In step S106, the UE 100 determines whether the neighboring cell #2 has the capability of providing the MBS SIB based on the SI scheduling information in the SIB 1 received in step S105. For example, the UE 100 determines that the neighboring cell #2 has the capability of providing the MBS SIB in any of the following cases:
- in which SIB type information (SIB-TypeInfo) in the SI scheduling information includes the MBS SIB; and
- in which the MBS SIB is set to "broadcasted" or "not broadcasted" in an SI broadcast status (si-BroadcastStatus) in the SI scheduling information.

The UE 100 may determine that the neighboring cell #2 does not have the capability of providing the MBS SIB in any of the following cases:
- in which the MBS SIB is not included in the SIB type information (SIB-TypeInfo) in the SI scheduling information; and
- in which the MBS SIB is not set to "broadcasted" or "not broadcasted" in the SI broadcast status (si-BroadcastStatus) in the SI scheduling information.

When the neighboring cell #2 is determined to have the capability of providing the MBS SIB (step S106: YES), the UE 100 decides in step S107 that the frequency priority of the desired MBS frequency is the highest priority.

In step S108, the UE 100 reselects the neighboring cell #2 as a new serving cell by performing the measurement processing and the cell reselection processing.

In step S109, the UE 100 may transmit, to the cell #2, a transmission request requesting transmission of the MBS SIB. The transmission request may be a random access preamble transmitted on a special physical random access channel (PRACH) resource.

In step S110, the UE 100 receives the MBS SIB from the cell #2.

In step S111, the UE 100 receives the MCCH from the cell #2 based on the MCCH configuration information in the MBS SIB received in step 5110.

In step S112, the UE 100 receives the MTCH (i.e., MBS data) from the cell #2 based on the MTCH configuration information in the MCCH received in step S111.

### Second Embodiment

A second embodiment is described mainly regarding differences from the first embodiment described above.

As described above, the UE 100 may acquire, as the information indicating the correspondence between the MBS service and the frequency, two types of information, i.e., the USD, which is the higher layer information provided by the higher layer, and the broadcast information (SIB for service continuity) provided by the RAN (to be more specific, the RRC layer) corresponding to the gNB 200. Note that the broadcast information is not limited to the SIB for service continuity and may be neighboring cell information in the MCCH. However, an example in which the broadcast information is the SIB for service continuity is described below.

Here, the correspondence relationship between the MBS service and the frequency indicated by the USD may not match the correspondence relationship between the MBS service and the frequency indicated by the SIB for service continuity. For example, the frequency indicated by the USD (and the corresponding MBS service) may not be indicated by the SIB for service continuity.

In such a case, the RAN may intentionally remove information of a frequency from the SIB for service continuity, for example, due to that the MBS service cannot be currently provided at that frequency. In such a scenario, it is not preferable for the UE 100 to specify the desired MBS frequency based on the USD. On the other hand, for example, when the MBS service is uniformly provided in all cells on a certain frequency, since the RAN does not need to provide dynamic frequency information, it is considered that the frequency information may be efficiently provided only by the USD (only by providing information once) for the MBS service. In such a scenario, the UE 100 preferably specifies the desired MBS frequency based on the USD. However, which of the two scenarios applies is difficult for the UE 100 to determine.

In the second embodiment, the UE 100 in the RRC idle state or the RRC inactive state selects any one of the SIB for service continuity provided by broadcast from the network in the RRC layer and the higher layer information provided from the network in the layer higher than the RRC layer. The UE 100 prioritizes the desired MBS frequency associated with the desired MBS service over other frequencies in the cell reselection procedure based on one of pieces of the information selected in the selecting step.

In the second embodiment, the UE 100 acquires selection information provided from the network. The selection information is information regarding whether the USD is prioritized over the SIB for service continuity. That is, the selection information indicates one or more statuses of prioritizing the USD, prioritizing the SIB for service continuity, not prioritizing the USD, and not prioritizing the SIB for service continuity. The UE 100 selects one piece of information of the SIB for service continuity and the USD based on the selection information. The UE 100 may receive the selection information broadcast by the network. The UE 100 may acquire the selection information included in the USD.

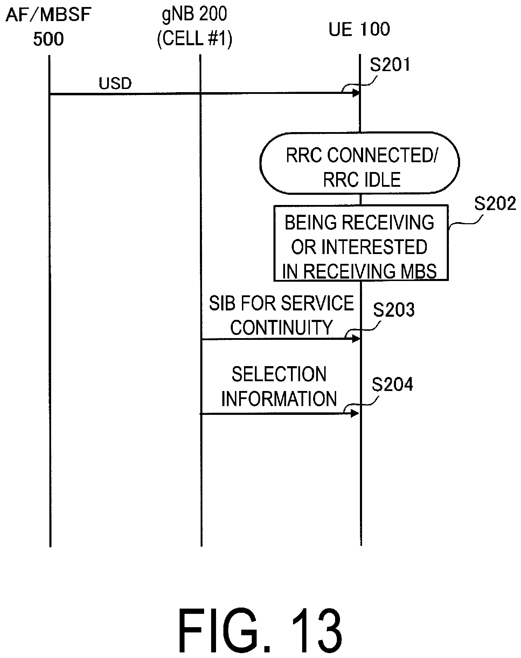

FIG. 13 is a diagram illustrating a first operation example according to the second embodiment. In this operation example, the gNB 200 notifies, by broadcast, the UE 100 of whether to perform the cell reselection using the USD.

In step S201, the UE 100 receives the USD from the AF/MBSF 500.

In step S202, the UE 100 in the RRC idle state or the RRC inactive state is receiving or interested in receiving the MBS.

In step S203, the UE 100 receives the SIB for service continuity broadcast from the gNB 200 (serving cell).

In step S204, the UE 100 receives the selection information broadcast from the gNB 200 (serving cell). The selection information may be included in the SIB for service continuity, the MBS SIB, the SIB1 or the MCCH. The selection information may be information indicating that the frequency indicated by the USD is (permitted to be) prioritized in the cell reselection procedure. Here, "prioritize" may mean that, when the USD has information of a frequency not indicated by the SIB for service continuity, the frequency indicated by the USD can be specified as the desired MBS frequency. "Prioritize" may mean that, when the USD has information of a frequency indicated by the SIB for service continuity, the frequency indicated by the USD can be specified as the desired MBS frequency. "Prioritizing the USD" may mean that the SIB for service continuity is not acquired. "Not prioritizing the USD" may mean that the content of the USD is not confirmed (read) when the SIB for service continuity can be acquired. The selection information may be notified to the UE 100 in association with the MBS service identifier (MBS session identifier).

When the selection information indicates the permission for the USD prioritized, the UE 100 may specify the frequency indicated by the USD as the desired MBS frequency for the desired MBS service regardless of the frequency indicated by the SIB for service continuity.

Even if the selection information indicates the permission for the USD prioritized, when the UE 100 receives the SIB for service continuity, the UE 100 may specify the frequency indicated by the SIB for service continuity as the desired MBS frequency for the desired MBS service.

When the selection information does not indicate the permission for the USD prioritized, the UE 100 may specify the frequency indicated by the SIB for service continuity as the desired MBS frequency for the desired MBS service regardless of the frequency indicated by the USD.

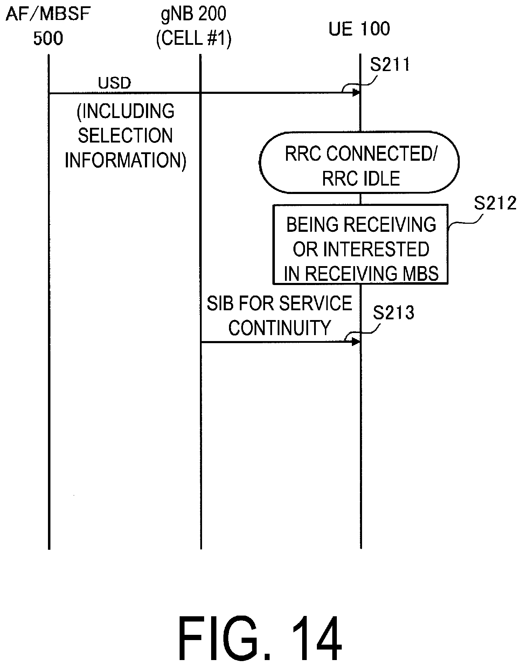

FIG. 14 is a diagram illustrating a second operation example according to the second embodiment. In this operation example, when the SIB for service continuity does not have the information of the frequency indicated by the USD, the AF/MBSF 500 provides the UE 100 with the USD including the selection information indicating whether the frequency is prioritized.

In step S211, the UE 100 receives the USD including the selection information from the AF/MBSF 500.

In step S212, the UE 100 in the RRC idle state or the RRC inactive state is receiving or interested in receiving the MBS.

In step S213, the UE 100 receives the SIB for service continuity broadcast from the gNB 200 (serving cell). Here, the UE 100 confirms that the information of the frequency (mapping information between the frequency and the corresponding MBS service) is not included in the SIB for service continuity for the desired MBS service.

When the selection information indicates the permission for the USD prioritized, the UE 100 specifies the frequency indicated by the USD as the desired MBS frequency for the desired MBS service.

On the other hand, when the selection information does not indicate the permission for the USD prioritized, the UE 100 does not specify the frequency indicated by the USD as the desired MBS frequency for the desired MBS service.

### Variation of Second Embodiment

The second embodiment above describes the example in which the gNB 200 (serving cell) provides the UE 100 with the SIB for service continuity by broadcast. However, the gNB 200 (serving cell) may conceivably not broadcast the SIB for service continuity (to be specific, may have the capability of providing the SIB for service continuity).

In this variation, the UE 100 determines whether the gNB 200 (serving cell) has the capability of providing the SIB for service continuity, and selects one piece of information of the SIB for service continuity and the USD as the information for specifying the desired MBS frequency based on the determination result. The UE 100, when determining that the gNB 200 (serving cell) does not have the capability of providing the SIB for service continuity, selects the USD as the information for specifying desired MBS frequency. On the other hand, the UE 100, when determining that the gNB 200 (serving cell) has the capability of providing the SIB for service continuity, selects the SIB for service continuity as the information for specifying desired MBS frequency.

Here, the serving cell not having the capability of providing the SIB for service continuity may mean any one of the following:
- the serving cell is not transmitting the SIB for service continuity;
- no information indicating the SIB for service continuity is present, for example, neither "broadcasted" nor "not broadcasted" is set, in the SI scheduling information of the SIB 1 of the serving cell;
- the serving cell is not transmitting the MBS SIB;
- no information indicating the MBS SIB is present in the SI scheduling information of the SIB1 of the serving cell;
- the serving cell is not transmitting the MCCH; and
- no identifier indicating that MBS capability (or capability of transmitting the SIB for service continuity) is supported is present in the SIB1 or the like.

On the other hand, the serving cell having the capability of providing the SIB for service continuity may mean any one of the following:
- the serving cell is transmitting the SIB for service continuity;
- information indicating the SIB for service continuity is present, for example, "broadcasted" or "not broadcasted" is set, in the SI scheduling information of the SIB1 of the serving cell;
- the serving cell is transmitting the MBS SIB;
- information indicating the MBS SIB is present in the SI scheduling information of the SIB 1 of the serving cell;
- the serving cell is transmitting the MCCH; and
- an identifier indicating that MBS capability (or capability of transmitting the SIB for service continuity) is supported is present in the SIB1 or the like.

When the serving cell is determined to not have the capability of providing the SIB for service continuity, the UE 100 reads the information of the frequency corresponding to the desired MBS service from the USD and specifies that frequency as the desired MBS frequency.

On the other hand, when the serving cell is determined to have the capability of providing the SIB for service continuity, the UE 100 receives the SIB for service continuity from the serving cell. Here, when the serving cell has the capability of providing the SIB for service continuity but does not provide the SIB for service continuity, the UE 100 may request the serving cell to transmit the SIB for service continuity and then receive the SIB for service continuity. When the SIB for service continuity includes the information of the frequency associated with the desired MBS service, the UE 100 may determine that the MBS service of interest is provided at that frequency and specify that frequency as the desired MBS frequency. In contrast, when the information of the frequency associated with the desired MBS service is not included in the SIB for service continuity, the UE 100 determines that the desired MBS service is not provided at the current frequency and/or different frequencies. In this case, the UE 100 may perform the cell reselection procedure using a typical frequency priority. The UE 100 may consider the current serving frequency as the highest priority.

### Third Embodiment

A third embodiment is described mainly on differences from the first and second embodiments.

As described above, the UE 100 being receiving or interested in receiving the MBS prioritizes the desired MBS frequency over other frequencies when the neighboring cell belonging to the desired MBS frequency provides the MBS SIB (e.g., is capable of providing the MBS SIB).

However, the UE 100, after performing the priority handling processing like this, may reselect a cell different from the neighboring cell as a result of the measurement processing and the cell reselection processing. In such a case, when the different cell does not provide (e.g., does not have the capability of providing) the MBS SIB, the UE 100 cannot perform MBS reception.

Therefore, in the third embodiment, the UE 100 determines whether to provide the MBS SIB for a neighboring cell having a good radio quality among the neighboring cells belonging to the desired MBS frequency. Determining whether a neighboring cell having a good radio quality provides the MBS SIB can increase a possibility that the neighboring cell is reselected as a result of the subsequent measurement processing and cell reselection processing, thereby facilitating the UE 100 to perform the MBS reception.

To be more specific, in the third embodiment, the UE 100 specifies at least one cell belonging to the desired MBS frequency associated with the desired MBS service, where a result of measurement on the at least one cell satisfies a predetermined criterion. The UE 100, when determining that the specified cell provides the MBS SIB, prioritizes the desired MBS frequency over other frequencies in the cell reselection procedure.

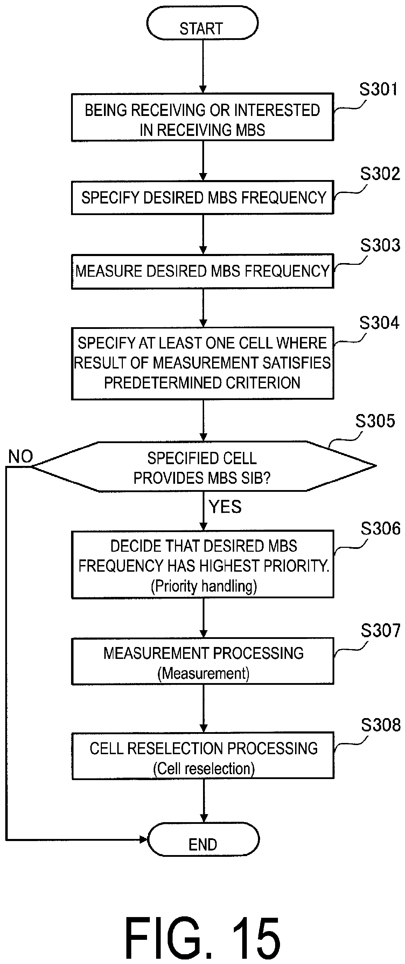

FIG. 15 is a flowchart illustrating an operation example of the cell reselection procedure according to the third embodiment.

In step S301, the UE 100 in the RRC idle state or the RRC inactive state is receiving or interested in receiving the MBS.

In step S302, the UE 100 specifies the desired MBS frequency associated with the desired MBS service based on the USD or the SIB for service continuity.

In step S303, the UE 100 performs the measurement processing including measurement on the desired MBS frequency specified in step S302.

In step S304, the UE 100 specifies at least one cell where a result of the measurement in step S303 satisfies a predetermined criterion. Here, the predetermined criterion may be a condition that the cell has the best radio quality. In this case, the UE 100 specifies one cell having the best radio quality in step S304.

The predetermined criterion may be a condition that the cell has a radio quality equal to or higher than a minimum necessary quality criterion (a certain threshold). The predetermined criterion may be a condition that the cell has the best radio quality and that the cell has a radio quality with a difference from the best radio quality being within a certain threshold. In this case, the UE 100 specifies one or more cells in step S304. Note that the threshold may be provided by the gNB 200 in the SIB.

The UE 100 may decide the predetermined criterion also in consideration of a moving speed of the UE 100 itself. For example, the UE 100 may specify the cell having the best radio quality in step S304 when not moving, specify a small number of higher-quality cells in step S304 when moving at a low speed, and specify a large number of higher-quality cells in step S304 when moving at a high speed. Here, the small/large number may be decided by changing the certain value (threshold) of the radio quality.

In step S305, the UE 100 determines whether at least one cell specified in step S304 provides the MBS SIB. The determination may be made in a manner the same as, and/or similar to, the first embodiment described above.

The UE 100, when determining that at least one cell specified in step S304 provides the MBS SIB (step S305: YES), decides in step S306 that the frequency priority of the desired MBS frequency is the highest priority.

In step S307, the UE 100 performs the measurement processing as described above.

In step S308, the UE 100 performs the cell reselection processing as described above.

### Variation of Third Embodiment

In this variation, the UE 100, when determining that at least one cell belonging to the desired MBS frequency associated with the desired MBS service provides the MBS SIB, prioritizes the desired MBS frequency over other frequencies in the cell reselection procedure. The UE 100 specifies a candidate cell from the desired MBS frequency based on the result of the measurement on the desired MBS frequency. When the at least one cell (i.e., the cell providing the MBS SIB) includes the specified candidate cell, the UE 100 reselects the candidate cell.

On the other hand, when the specified candidate cell is not included in the at least one cell, the UE 100 determines whether the candidate cell provides the broadcast information. When the candidate cell is determined to provide the broadcast information, the UE 100 reselects the candidate cell.

In this way, after the UE 100 determines that at least one cell belonging to the desired MBS frequency provides the MBS SIB in the frequency priority handling processing, when a cell different from the cell determined to provide the MBS SIB becomes a reselection candidate, the UE 100 determines whether the candidate cell provides the MBS SIB.

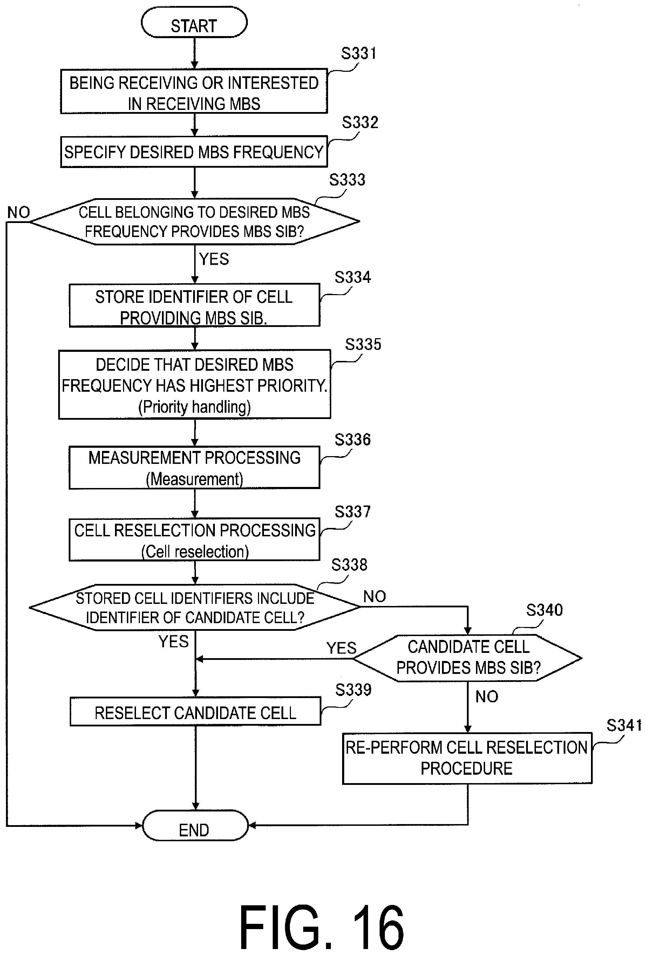

FIG. 16 is a diagram illustrating the cell reselection procedure according to the variation.

In step S331, the UE 100 in the RRC idle state or the RRC inactive state is receiving or interested in receiving the MBS.

In step S332, the UE 100 specifies the desired MBS frequency associated with the desired MBS service based on the USD or the SIB for service continuity.

In step S333, the UE 100 determines whether the cell belonging to the desired MBS frequency specified in step S332 provides the MBS SIB. The determination may be made in a manner the same as, and/or similar to, the first embodiment described above.

The UE 100, when determining that the cell belonging to the desired MBS frequency provides the MBS SIB (step S333: YES), stores in step S334 the cell identifier of each of the at least one cell determined to provide the MBS SIB.

In step S335, the UE 100 decides that the frequency priority of the desired MBS frequency is the highest priority.

In step S336, the UE 100 performs the measurement processing as described above.

In step S337, the UE 100 performs the cell reselection processing as described above. Here, the UE 100 specifies a candidate cell satisfying a condition for cell reselection, and confirms a cell identifier of the candidate cell.

In step S338, the UE 100 determines whether the cell identifiers stored in step S334 includes the cell identifier of the candidate cell specified in step S337.

When the cell identifiers stored in step S334 includes the cell identifier of the candidate cell specified in step S337 (step S338: YES), the UE 100 considers in step S339 that the candidate cell specified in step S337 provides the MBS SIB and reselects the candidate cell. As described above, making the determination based on the stored cell identifier enables an efficient operation.

On the other hand, when the cell identifier of the candidate cell specified in step S337 is not included in the cell identifiers stored in step S334 (step S338: NO), the UE 100 determines in step S340 whether the candidate cell specified in step S337 provides the MBS SIB. The determination may be made in a manner the same as, and/or similar to, the first embodiment described above. The UE 100, when determining that candidate cell specified in step S337 provides the MBS SIB (step S340: YES), reselects the candidate cell in step S339.

The UE 100, when determining that the candidate cell specified in step S3 37 does not provide the MBS SIB (step S340: NO), ceases to consider the desired MBS frequency as the highest priority and re-performs the cell reselection procedure in step S341. Note that the UE 100 may cease to consider the desired MBS frequency as the highest priority and re-perform the cell reselection procedure, when NO in step S338 without performing the processing in step S340.

### Fourth Embodiment

A fourth embodiment is described mainly on differences from the first and second embodiments.

The MBS SIB carrying the MCCH configuration of a cell is assumed to not have information indicating the MBS service (MBS session) provided by the cell. Therefore, unless the UE 100 receives the MCCH, the UE 100 cannot grasp whether the cell actually provides the desired MBS service (desired MBS session).

However, since the UE 100 specifies the desired MBS frequency providing the desired MBS service based on the USD or the SIB for service continuity, it is considered that the cell belonging to the desired MBS frequency provides the desired MBS service. However, since each cell (gNB 200) has the right to decide resource allocation, the NR MBS may not (temporarily) provide the MBS service for a reason of the cell such as congestion and overload.

In the fourth embodiment, the UE 100 reselects a cell belonging to the desired MBS frequency by prioritizing the desired MBS frequency over other frequencies in the cell reselection procedure. The UE 100 determines whether the cell provides the desired MBS service based on the MCCH transmitted from the cell. The UE 100, when determining that the cell does not provide the desired MBS service, re-performs the cell reselection procedure. Here, the UE 100 may cease to consider the desired MBS frequency as the prioritized frequency (highest priority).

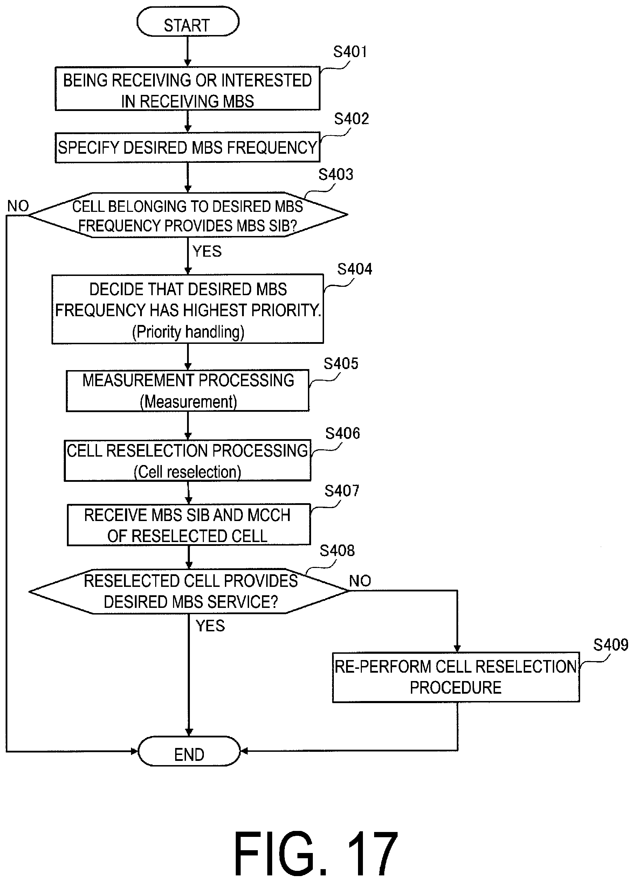

FIG. 17 is a flowchart illustrating an operation example of the cell reselection procedure according to the fourth embodiment.

In step S401, the UE 100 in the RRC idle state or the RRC inactive state is receiving or interested in receiving the MBS.

In step S402, the UE 100 specifies the desired MBS frequency associated with the desired MBS service based on the USD or the SIB for service continuity.

In step S403, the UE 100 determines whether the cell belonging to the desired MBS frequency specified in step S402 provides the MBS SIB. The determination may be made in a manner the same as, and/or similar to, the first embodiment described above.

In step S404, the UE 100 decides that the frequency priority of the desired MBS frequency is the highest priority.

In step S405, the UE 100 performs the measurement processing as described above.

In step S406, the UE 100 performs the cell reselection processing as described above.

In step S407, the UE 100, after receiving the MBS SIB from the cell reselected in step S406, receives the MCCH from that cell based on the MBS SIB.

In step S408, the UE 100 determines whether the cell reselected in step S406 provides the MBS service based on the MCCH received in step S407.

The UE 100, when determining that the cell reselected in step S406 does not provide the desired MBS service (step S408: NO), ceases to consider the desired MBS frequency as the highest priority and re-performs the cell reselection procedure in step S409.

### Variation of Fourth Embodiment

The MBS SIB provided by the cell being configured to include the identifier of each MBS service (each MBS session) provided by the cell can avoid a situation in which the desired MBS service is not provided after the cell reselection. However, the MBS SIB is expected to be provided on demand, and thus, the transmission request for the MBS SIB being performed in the cell reselection procedure is not preferable in terms of delay and power consumption.

The identifier of each MBS service (each MBS session) being included in the SIB1 is conceivable, but is difficult because a message size of the SIB1 is limited. Therefore, in this variation, the gNB 200 gives, in the SIB1 (or MIB), notification of 1-bit information indicating whether the provision of the MBS service is restricted.

In this variation, the UE 100 receives the SIB1 (or MIB) including information broadcast by the neighboring cell belonging to the desired MBS frequency, the information being regarding whether MBS service provision in the neighboring cell is restricted. The UE 100 prioritizes the desired MBS frequency over other frequencies in the cell reselection procedure in response to the SIB1 (or MIB) indicating that the MBS service provision is not restricted.

In this variation, assumed that each cell (gNB 200) grasps the correspondence relationship between the frequency and the MBS service provided in the USD and the SIB for service continuity to the UE 100, and recognizes the MBS service to provide in the cell (or at the frequencies to which the cell belongs). The "MBS service provision being restricted" in the cell means that provision of at least one of the MBS services to provide in the cell is (temporarily) stopped. When each cell (gNB 200) does not provide at least one MBS service to provide in the cell itself, an identifier indicating that the MBS service is restricted may be included in the SIB1 (or MIB). When each cell (gNB 200) does not provide at least one MB S service to provide in the cell itself, an identifier of the MBS service which is not provided may be included in the SIB1 (or the MIB). When each cell (gNB 200) provides all MBS services to provide in the cell itself, an identifier indicating that the MBS services are not restricted may be included in the SIB1 (or MIB). When each cell (gNB 200) provides all MBS services to provide in the cell itself, that identifier may not be included in the SIB1 (or MIB).

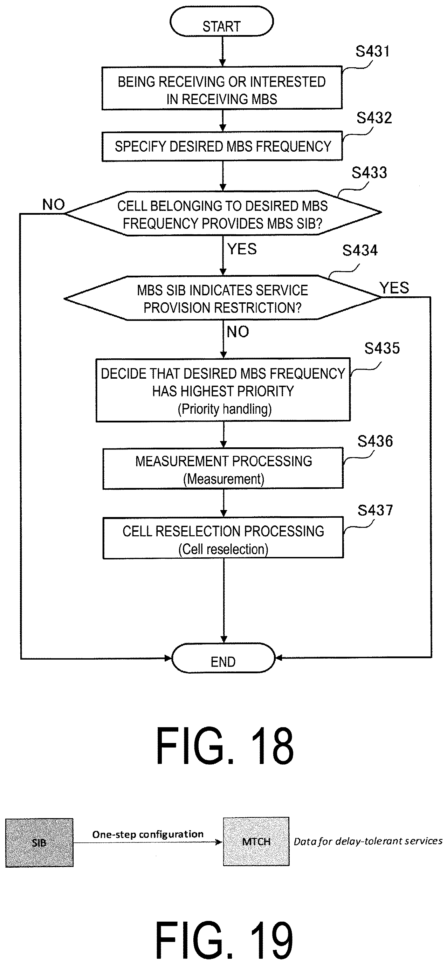

FIG. 18 is a diagram illustrating the cell reselection procedure according to the variation.

In step S431, the UE 100 in the RRC idle state or the RRC inactive state is receiving or interested in receiving the MBS.

In step S432, the UE 100 specifies the desired MBS frequency associated with the desired MBS service based on the USD or the SIB for service continuity.

In step S433, the UE 100 determines whether the cell belonging to the desired MBS frequency specified in step S432 provides the MBS SIB. The determination may be made in a manner the same as, and/or similar to, the first embodiment described above.

The UE 100, when determining that the cell belonging to the desired MBS frequency provides the MBS SIB (step S433: YES), confirms in step S434 the SIB1 (or MIB) provided by the cell and determines whether the MBS services provided in the cell are restricted. The SIB1 (or MIB) may be confirmed at the time of cell reselection processing (before step S437 or in step S437). That is, the UE 100 performs the confirmation on the cell having the best radio quality (best cell) at the frequency. When some of the MBS services provided in the cell are restricted, the UE 100 excludes the frequency from the highest priority targets. When no MBS service provided in the cell is restricted, the UE 100 reselects the cell.

When some of the MBS services provided in the cell are determined to be restricted (step S434: YES), the desired MBS frequency is excluded from the highest priority targets.

On the other hand, when no MBS service provided in the cell is determined to be restricted (step S434: NO), the UE 100 decides in step S435 that the frequency priority of the desired MBS frequency is the highest priority.

In step S436, the UE 100 performs the measurement processing as described above.

In step S437, the UE 100 performs the cell reselection processing as described above.

### Other Embodiments

The operation flows described above can be separately and independently implemented, and also be implemented in combination of two or more of the operation flows. For example, some steps of one operation flow may be added to another operation flow or some steps of one operation flow may be replaced with some steps of another operation flow.

In the embodiments and examples described above, an example in which the base station is an NR base station (i.e., a gNB) is described; however, the base station may be an LTE base station (i.e., an eNB) or a 6G base station. The base station may be a relay node such as an Integrated Access and Backhaul (IAB) node. The base station may be a DU of the IAB node. The user equipment may be a Mobile Termination (MT) of the IAB node.

A program causing a computer to execute each of the processing performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 or the gNB 200 may be implemented as a semiconductor integrated circuit (chipset, system on a chip (SoC)).

Embodiments have been described above in detail with reference to the drawings, but specific configurations are not limited to those described above, and various design variation can be made without departing from the gist of the present disclosure.

The phrases "based on" and "depending on" used in the present disclosure do not mean "based only on" and "only depending on," unless specifically stated otherwise. The phrase "based on" means both "based only on" and "based at least in part on". The phrase "depending on" means both "only depending on" and "at least partially depending on". "Obtain" or "acquire" may mean to obtain information from stored information, may mean to obtain information from information received from another node, or may mean to obtain information by generating the information. The terms "include", "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

This application claims priority to US Provisional Patent Application No. 63/257215 (filed on October 19, 2021), the contents of which are incorporated herein by reference in their entirety.

### Supplementary Note

### 1. Introduction

The revised work item for NR Multicast and Broadcast Services (MBS) was approved in RAN #88. In RAN2, two delivery modes were agreed: a first delivery mode for multicast sessions received by connected UEs and a second delivery mode for broadcast sessions received by UEs in all RRC states.

For the second delivery mode, the following agreement is achieved in RAN2 #115-e.

### For Idle/Inactive

The UE is allowed to prioritize the MBS frequency of interest when the cell with the MBS frequency provides an MBS SIB carrying the MCCH configuration in a manner the same as and/or similar to LTE SC-PTM.

When the UE can receive the MBS service only by camping on the MBS frequency as the LTE SC-PTM, the UE is allowed to prioritize the MBS frequency of interest.

### For Idle/Inactive

- The UE may consider the cell reselection candidate frequency at which the MBS service cannot be received during the MBS session as the lowest priority as the LTE SC-PTM.
- Working assumption: The mapping between frequency and MBS service ID (e.g. SAI) is provided in higher layer signaling (e.g. USD) as LTE SC-PTM (detailed information included in higher layer is provided as LTE SC-PTM). (detailed information included in the higher layer (e.g., USD) is left to determination of other WGs.)
- Send an LS to SA2 and SA4 to check whether the mapping between frequency and MBS service ID (e.g., SAI) is provided in the higher layer signaling (e.g. USD), as LTE SC-PTM.
- The mapping between frequency and MBS service ID (e.g., SAI) is provided in SIB, as LTE SC-PTM. Wait for the feedback from other WGs on the detailed mapping.
- The mapping between frequency and MBS service ID (e.g. SAI) is allowed to be transmitted in a cell not broadcasting the MBS serviced, as LTE SC-PTM.
- The mapping between frequency and MBS service ID (e.g., SAI) is provided in new SIB different from the MBS SIB providing MCCH configuration, as LTE SC-PTM.
- The MBS service ID (e.g. SAI) is provided in SIB and USD, as LTE SC-PTM. Wait for the feedback from other WGs on details of the ID.
- Send an LS to SA2, SA4, and RAN3 to check whether MBS service ID (e.g., SAI) is provided in SIB and USD, as LTE SC-PTM.
- Whether the gNB can indicate a list of neighboring cells where ongoing broadcast MBS service provided in the current cells are provided needs to be further studied, as LTE SC-PTM.
- The extra offset to cell (which provides the MBS service) for the cell ranking criterion is not supported in Rel-17.

### For Connected

- The UE reports the following MBS interest information (as LTE SC-PTM).

### MBS frequency list

### Priority between reception of all listed MBMS frequencies and reception of any unicast bearers

### TMGI list

- When reporting of MBS frequencies is allowed, the MBS frequencies reported by the UE is sorted by decreasing order of interest, as LTE SC-PTM.
- Send an LS to SA3 to check whether the MBS interest information can be reported by the UE before security activation.
- Whether MII is reported via UEAssistanceInformation or a new RRC message needs to be further studied.

This supplementary note discusses the remaining issues of broadcast service continuity and aspects of the common control plane in the two delivery modes.

### 2. Discussion

### 2.1 Neighboring Cell Information

RAN2 agreed to the following unsettled matters.

Whether the gNB can indicate a list of neighboring cells where broadcast MBS service provided in the current cells are provided needs to be further studied, as LTE SC-PTM.

In the LTE SC-PTM, since information of neighboring cells is provided from the serving cell through the SC-MCCH, the UE can know a cell providing an MBMS service of interest. With this information, the UE does not need to acquire the SC-MCCH from the neighboring cell during cell reselection, which can reduce latency and power consumption and improve service continuity from the UE perspective.

In NR MBS, since NR supports the On-demand SI mechanism, when neighboring cell information is not provided from the network, the situation may be worse than in LTE SC-PTM. That is, the UE needs to request each neighboring cell to provide an MBS-specific SIB that is "not broadcasted" during cell reselection to obtain the MCCH scheduling information. Then, the UE needs to acquire the MCCH to confirm whether each neighboring cell provides the MBS service of interest.

Observation 1: when the neighboring cell information is not provided, the UE may need to request the On-demand SI to obtain the MCCH scheduling information, and during the cell reselection procedure, obtain MCCH to check whether the MBS service of interest is provided in each neighboring cell.

In the discussion of RAN2 #115-e, it is claimed to be very complex for the network to provide the neighboring cell information, especially when the start/stop of the MBS session is dynamically determined by the cell. However, since this condition is not different from LTE SC-PTM, it cannot be considered that the network cannot provide the neighboring cell information. Whether it is necessary to coordinate with the network or whether it can be processed by the OAM depends on the RAN3.

There may also be an option for higher layers (e.g., USD) to provide the neighboring cell information. However, this cannot be said to be an executable option because this is proven to be difficult even with networks.

Therefore, like LTE SC-PTM, the network needs to provide the neighboring cell information in order to reduce cell reselection latency and UE power consumption.

Proposal 1: RAN2 needs to agree that the gNB provides, via the MCCH, a list of neighboring cells that are continuously provided with broadcast MBS service.

When proposal 1 is accepted, it is correct that in addition to the information provided in SIBy, the UE is allowed to use this information for priority handling of cell reselection.

Proposal 2: When proposal 1 is agreeable, RAN2 needs to agree that the UE is allowed to use the list of neighboring cells provided on the MCCH during priority handling of cell reselection.

### 2.2. Cell Reselection Priority Processing

### 2.2.1. MBS SIB Check during Cell Reselection

RAN2 agreed on the UE operation regarding the priority handling of cell reselection as follows.

### For Idle/Inactive

- The UE is allowed to prioritize the MBS frequency of interest when the cell with the MBS frequency provides an MBS SIB carrying the MCCH configuration in a manner the same as and/or similar to LTE SC-PTM.
- When the UE can receive the MBS service only by camping on the MBS frequency as the LTE SC-PTM, the UE is allowed to prioritize the MBS frequency of interest.

### For Idle/Inactive

- The UE may consider the cell reselection candidate frequency at which the MBS service cannot be received during the MBS session as the lowest priority as the LTE SC-PTM.

These operations of UE reuse the LTE eMBMS specification. However, one of the differences between NR MBS and LTE eMBMS is that NR supports the On-demand SI mechanism. In On-demand SI, the gNB may decide whether to "broadcast" or "not broadcast" the SIB. The SIB "not broadcast" is provided on demand, i.e. in response to an On-demand SI request from the UE.

For On-demand SI, the agreement "when the MBS frequency provides an MBS SIB of the MCCH configuration" is problematic because there are two interpretations as follows.

Interpretation 1: The UE checks whether the MBS SIB is actually broadcast from a neighboring cell. In this case, if the MBS SIB is "not broadcast" during cell reselection, the UE considers that the frequency for that cell is not prioritized or sends an On-demand SI request to that cell.

Interpretation 2: The UE checks whether the MBS SIB can be broadcast by the neighboring cell. In this case, the UE checks the SIB1 only when the MBS SIB is available, even whether the SIB1 is "broadcast" or "not broadcast".

To our understanding, interpretation 1 has no meaning because it is different from the intended action. In addition, when the UE needs to send an On-demand SI request in each neighboring cell, the power consumption of the UE and the cell reselection latency will be large.

Interpretation 2, on the other hand, is consistent with the intended action, but is not correctly represented in the contract. The specification needs to clearly capture the intended action based on Interpretation 2.

Proposal 3: RAN2 needs to agree that the agreement "when the MBS frequency provides an MBS SIB" means that MBS cells provide regardless of whether "broadcast" or "not broadcast" by On-demand SI.

### 2.2.2. Priority of Information between SIBy/MCCH and USD

The currently running CR is described as follows.
When one or more IDs of that frequency (e.g. SAI) are indicated in the SIBy of the serving cell, whether the frequency of the USD is also to be checked needs to be further studied.

When the SIBy is broadcast but no mapping of the service is provided, whether the UE can prioritize the frequencies indicated in the USD needs to be further studied.

In general, it is considered that the UE follows the information provided from the gNB. This is because the gNB is responsible for frequency management and can handle up-to-date information compared to the USD. For example, when a neighboring cell of the gNB cannot provide the MBS service due to resource shortage or the like, the gNB knows such operation information and decides to provide it in SIBy (or MCCH). Given that the UE is in an idle/inactive state, the USD may not be updated since it is provided in a higher layer message. Thus, if a frequency of interest is provided in SIBy (and/or when a neighboring cell of interest is provided in the MCCH if agreed), the UE does not need to check the frequency in the USD. With such an operation, the specifications can be avoided from complicated, for example, what the UE performs when the frequency of interest of the USD does not match the frequency of interest of the SIBy.

Note that a strict requirement is not intended to be placed that the UE cannot use the USD when the SIBy is broadcast.

Observation 2: In general, since the frequency information of the USD may be outdated, the UE needs to follow the latest information provided from the gNB.

Proposal 4: RAN2 needs to agree that when the frequencies of interest are provided in SIBy, the UE does not need to check the frequency information of the USD.

However, the UE operation when no information is provided in the SIBy (and MCCH) but in the USD needs to be carefully studied. For the frequencies indicated in the USD, the following cases may be considered as reasons why the gNB does not provide the frequency information (and/or the neighboring cell information in the MCCH if agreed) in the SIBy.

When the gNB intentionally hides specific frequency information
- Case 1: Since the gNB knows that a neighboring frequency/cell does not provide the MBS service due to congestion or the like, the gNB wants to avoid the UE prioritizing the frequency. Or
- Case 2: The gNB intends that the UE uses the USD to decide the frequency of interest. For example, as a deployment policy, all cells on a frequency are providing the MBS service.

The gNB does not know the neighbor's operational information.
- Case 3: The gNB does not have information about UE (when OAM configuration or signal exchange is not performed between the gNBs).

Considering these cases, defining one deterministic UE operation is difficult because which case is to be applied depends on different gNB implementations and deployment policies. In any case, the UE clearly does not know the gNB's intent or deployment policy. Therefore, the UE needs to be indicated whether the UE is allowed to preferentially use the frequency of interest in the USD. Whether such an indication is provided in the SIB or USD needs to be further studied.

Proposal 5: RAN2 needs to discuss whether the UE is allowed to prioritize frequencies of interest in the USD when no frequencies are provided in the SIBy if indicated (e.g., in the SIB).

### 2.2.3. Stopping Prioritization of Frequencies

The currently running CR is described as follows.

When an SIBx is no longer scheduled in the serving cell (reselection cell), whether the UE stops the prioritization of frequencies needs to be further studied.

The case intended above occurs when the re-selected cell does not provide an SIBx even though the UE prioritizing frequency (i.e. based on the frequency information of the USD or the SIBy from the source cell). Such a mismatch of the cell reselection procedure may occur because the priority processing process, the measurement processing, and the cell reselection processing are sequentially performed in the specification, and it is assumed that the frequency information is used only in the priority processing process and the measurement processing and the cell reselection processing are performed as they are in the legacy.

Considering that the UE has checked the cell providing an SIBx before reselection, i.e. once it has checked that the cell can provide the MBS service, this case may be caused by any of the following conditions.
- Condition 1: The UE checks an SIBx of a non-best cell. Or
- Condition 2: The UE moves from a cell broadcasting an SIBx to a cell not broadcasting an SIBx after the prioritization of frequencies.

Condition 1 can be easily solved by a simple specification limitation (or annotation) such as performing the SIBx check in the best cell. However, it may also depend on the implementation of the UE.

Condition 2 can also be solved by another simple limitation (or annotation) such as performing the SIBx check in a candidate cell taking into account the mobility of the UE. However, it may also depend on the implementation of the UE.

Proposal 6: RAN2 needs to discuss whether the UE specifies (or adds an annotation) to check the SIBx of the best cell (or higher cell if needed for UE mobility).

The same and/or similar scenario may be that after cell reselection, the UE notices that no MBS service of interest is being provided in the reselected cell. This may happen because the UE only checks whether an SIBx is broadcast, i.e. an SIBx does not currently inform the UE of available MBS services (such as TMGI). Therefore, the UE acquires the MCCH after cell reselection to the cell, but the MCCH may not include the MBS service of interest.

It needs to be considered that the problem may be a subset of this scenario. In this case, it is natural that the UE will not consider the frequency of this cell as the highest priority in order to solve both problems.

Note that even for a frequency mapped to the MBS service in an SIBy, whether the MBS service is finally provided is considered to depend on implementation of the gNB, and thus there is a possibility that a cell on a certain frequency does not provide the MBS service.

Proposal 7: RAN2 agrees that the UE needs to stop the priority of frequencies when the reselected cell does not provide the MBS service of interest.

### 2.3. MBS Interest Indication

### 2.3.1. Definition of Message

RAN2 agreed to the basic content and unsettled matters of the MBS Interest Indication as follows.
- The UE reports the following MBS interest information (as LTE SC-PTM).

### MBS frequency list

### Priority between reception of all listed MBMS frequencies and reception of any unicast bearers

### TMGI list

- which of UEAssistanceInformation or a new RRC message MII is reported via needs to be further studied.

In LTE, the MBMS Interest Indication (MII) is separated from the UE Assistance Information (UAI). This is because the preconditions of obtaining the SIB 15 in the MII and the RRC connection configuration in the UAI are different. On the other hand, the In-device Coexistence Indication (IDC), which is a separate message in LTE, is integrated into UAI in NR. This is considered feasible in LTE (and NR) because the preconditions for IDC and UAI were the same, i.e. RRC connection configuration.

Observation 3: Whether the MBSMBS Interest Indication can be integrated with the UE Assistance Information depends on whether the preconditions match between the two messages.

In the NR MBS, the neighbor frequency information of the MBS-specific SIB or MCCH is needed to generate the MBS Interest Indication message with the above IEs. The MBS Interest Indication is expected to be configured by the MBS-specific SIB (or MCCH) as in the LTE eMBMS. Therefore, it does not match RRC Reconfiguration which is a precondition of UAI. Therefore, the MBS Interest Indication needs to be a separate message from the UAI, like the LTE eMBMS.

Proposal 8: RAN2 needs to agree to define the MBS Interest Indication as a new message, i.e. separately from the UE Assistance Information.

Proposal 9: RAN2 needs to agree that transmission of the MBS interest indication is allowed when the UE can acquire the MBS-specific SIB from a serving cell (i.e., as a precondition).

### 2.4. Multicast Session MBS Interest Indication

RAN2 currently assumes that MBS Interest Indication is supported in broadcast sessions and not in multicast sessions. RAN2 #115e has agreed on the basic content of the MBS Interest Indication referred to in the previous section, i.e. MBS frequencies list, priority and TMGI list.

In a multicast session, it is commonly understood that the core network informs the gNB of the interest of the UE because a higher layer session join procedure is in the higher session. The interest of the UE applies to the MBS services. The gNB may know the MBS frequency and the cell providing the MBS service of interest of the UE. However, the priority between MBS reception and unicast, which is purely AS-related information, may not be provided from the core network. That is, it is strange for the UE to convey the priority information to the core network during the session join procedure.

Observation 4: For a multicast session, the core network provides the gNB of an MBS service of interest of the UE, and the gNB may know the MBS frequency/cell, but the core network and the gNB may not know the AS priority of the UE between MBS and unicast.

The priority information, in a manner the same as and/or similar to LTE eMBMS, is also useful for the gNB, such as scheduling and handover decisions, and may also be relevant to the service continuity. Therefore, the UE needs to inform the gNB of the priority information also for multicast sessions. In this sense, RAN2 needs to agree that MBS Interest Indication is also supported for multicast service/delivery mode 1.

Proposal 10: RAN2 needs to agree that the MBS interest indication is also supported for multicast session/delivery mode 1, at least for the UE to inform the gNB of the priorities of MBS reception and unicast.

### 2.5. Dedicated MCCH (from the viewpoint of service continuity)

The RAN2 has agreed that "the discussion on whether a dedicated MCCH configuration is needed is delayed until RAN1 develops in the BWP/CFR of the MCCH". The dedicated MCCH is expected to be provided through, for example, an RRC configuration if supported.

Observation 5: Dedicated MCCH may be interpreted as MCCH provided by RRC reconfiguration rather than broadcast based.

On the other hand, the dedicated MCCH can be studied from the viewpoint of continuity of the broadcast service. There is already an agreement in RAN2 that "it is assumed that connected UEs can reuse the LTE SC-PTM mechanism in order to receive the PTM configuration in the NR MBS second delivery mode, i.e. in a broadcast based manner". Although this assumption relates to an intra-cell configuration, it is not related to inter-cell service continuity, i.e., handover.

Observation 6: RAN2 agreed to provide MCCH in a broadcast manner for intra-cell configuration, but not for inter-cell service continuity.

In LTE SC-PTM, it is assumed that the UE acquires the SIB20 and MCCH of the target cell in some way before, during or after the handover, which may be considered as the baseline of the NR MBS second delivery mode. However, this means that there is a risk of service interruption because the UE may miss or delay acquiring the MCCH of a neighboring cell, for example, in a busy state. Specifically, the MCCH of the target cell (at least the target MTCH scheduling information) needs to be provided by RRC Reconfiguration with sync, i.e., a handover command. This solution can reliably ensure the service continuity after a handover.

Proposal 11: RAN2 needs to agree to provide the MCCH of the target cell, at least the MTCH scheduling information of interest, during the handover procedure, i.e. by RRC Reconfiguration with sync, to ensure the inter-cell service continuity of the UE in RRC connected.

### 2.6. Multicast Session connected in Second Delivery Mode

The NR MBS is expected to support various types of use cases as quoted from the following WID. It is appreciated that the NR MBS needs to be appropriately designed for a variety of requirements ranging from delay sensitive applications such as mission critical applications and V2X to delay tolerant applications such as IoT, in addition to other aspects of requirements ranging from lossless application such as software delivery to UDP type streaming such as IPTV. In practice, it has been confirmed that not all multicast services require a "high QoS".

An object of the SA2 SI is to realize general MBS services via 5GS, and use cases capable of benefiting from this function include (but are not limited to) public safety and mission critical, V2X applications, transparent IPv4/IPv6 multicast delivery, IPTV, wireless software delivery, group communications, and IoT applications.

Although some of these services with "low QoS requirements" may be covered by the second delivery mode, other services with "high QoS requirements" are to need the first delivery mode. The LTE eMBMS may deliver a multicast session, which may be considered a baseline for the NR MBS. In this sense, it is beneficial for the gNB to be able to choose use of the second delivery mode for multicast sessions. This problem has been left for further study from RAN2 #112-e to RAN2 #114-e, but in general, there seems to be no technical reason to impose limitations from our point of view.

Note that RAN2 prioritizes "RRC connected mode". RAN2 prioritizes support of active multicast in RRC connected mode in Rel-17. Although it is agreed that if time is allowed, multicast support in RRC inactive state can be studied later (multicast solution in connected mode and broadcast solution more mature)", since the agreement was made in the context of the first delivery mode, it does not exclude a multicast session in the second delivery mode of UE in a connected state.

Proposal 12: RAN2 needs to agree that the second delivery mode can be used at least in multicast sessions of the UE in the RRC connected in addition to broadcast sessions.

### 2.7. Detailed Content of MBS-dedicated SIB

It is understood that whether the service of the MBS is provided in PTP or PTM, and is provided by the first delivery mode or the second delivery mode depends on the implementation of the NW. This provides a good balance between service reliability and spectral efficiency. However, from the viewpoint of a UE, especially for a UE in the idle/inactive and a UE late joining, the UEs need to know whether to need to start connection establishment to acquire an MBS service of interest. The UEs check the MCCH first, and when the MCCH does not contain MTCH scheduling information of the MBS service of interest, the UE may consider to be aware of the MBS service being only provided in the RRC connected state, i.e., via PTP, the first delivery mode or unicast (PDU session). However, such a process is a burden for the UEs and may cause some degree of delay before acquiring the MBS service. It is worth studying whether the MBS-specific SIB provides information of whether the UEs need to be connected to acquire the MBS service.

Proposal 13: RAN2 needs to discuss whether the MBS-specific SIB provides information for associating MBS services with their delivery modes.

RAN2 has agreed to introduce the MBS Interest Indication, which is currently assumed to be used for broadcast sessions. From the viewpoint of the UE, it is unclear whether the gNB can obtain the information of the MBS. From the viewpoint of the UE, whether the gNB can acquire information about the MBS service that the UE is interested in is unclear (which may be provided by the AMF for multicast sessions, but not for broadcast sessions). As a result, the UE does not know whether to send an MBS Interest Indication for the MBS service. Therefore, it is useful for the UE if the gNB provides information of whether the MBS Interest Indication is allowed for each MBS service. In other words, which MBS service requires the MBS Interest Indication. Therefore, RAN2 needs to study whether such additional information is needed.

Proposal 14: RAN2 needs to discuss whether to provide information of whether the MBS Interest Indication is allowed to be transmitted for each MBS service in MBS-specific SIB.

### 2.8. One-step Configuration

Another possibility is to integrate the MCCH with the BCCH, i.e. a one-step configuration as illustrated in FIG. 19. For example, the SIB provides the MTCH scheduling information directly, i.e., without the MCCH. This provides delay tolerant services and/or optimization of power-sensitive UE. For example, the UE can request the SIB (on-demand), and the gNB can start providing the SIB and the corresponding service after requests from the plurality of UEs. These UEs do not need to monitor the repeatedly broadcast MCCH.

Proposal 15: RAN2 needs to agree as a configuration option to support multicast reception without using MCCH (i.e., one-step configuration), e.g., the SIB directly provides the MTCH scheduling information.

### 2.9. Counting in Idle/Inactive

In NR MBS, it is agreed that MBS Interest Indication is supported in RRC connected but not in idle/inactive. Based on this, it may be worth studying to perform extension on LTE eMBMS.

In LTE eMBMS, although many UEs are receiving broadcast services in RRC idle, neither MII nor Counting can collect information from the idle UEs. This is one remaining problem of the LTE eMBMS from the viewpoint of session control and resource efficiency.

Observation 7: For a broadcast session, most UEs receiving the MBS service may be in the RRC idle/inactive state.

In the NR MBS, the same problem may occur in the UE in the idle/inactive, i.e., in the second delivery mode of broadcast sessions. For example, the network does not recognize whether the UE in the idle/inactive is no longer receiving/interested in the broadcast services. Thus, the network may continue to provide PTM transmission even when no UE is receiving services. When the gNB recognizes interest of the UEs in the idle/inactive state, such unnecessary PTM is preferably avoided. Conversely, when the PTM is stopped while the UEs in the idle/inactive state receiving services remain, many UEs may simultaneously transmit connection requests, which is also undesirable.

Accordingly, it is worth studying whether to introduce a mechanism for collecting the UE assistance information, specifically the MBMS counting, from the UE in the idle/inactive state. Needless to say, it is desirable that these UEs in the idle/inactive state be capable of reporting information without transitioning to the RRC connected state. For example, it is feasible when PRACH resource partitioning related to the MBS service is introduced for such reporting.

Note that since no MCE is present in the NR MBS, the MCE function will be integrated in the gNB. Therefore, no matter what kind of determination is made by the RAN3 from the viewpoint of the network interface, RAN2 determines whether Counting is necessary for the NR MBS.

Proposal 16: RAN2 needs to discuss whether the MBS counting is to be introduced and also collected from the UE in the idle/inactive state.

### REFERENCE SIGNS

1: Mobile communication system
10: RAN
20: CN
100: UE
110: Receiver
120: Transmitter
130: Controller
200: gNB
210: Transmitter
220: Receiver
230: Controller
240: Backhaul communicator

## Claims

1. A communication method performed by a user equipment in a radio resource control (RRC) idle state or an RRC inactive state in a mobile communication system configured to support a multicast and broadcast service (MBS), the communication method comprising:
selecting any one piece of information of broadcast information or higher layer information, the broadcast information being provided by broadcast from a network in an RRC layer, the higher layer information being provided from the network in a layer higher than the RRC layer; and
prioritizing a desired MBS frequency associated with a desired MBS service over other frequencies in a cell reselection procedure,
wherein each of the broadcast information and the higher layer information is information indicating a correspondence relationship between an MBS service and a frequency, and
the prioritizing comprises prioritizing based on the one piece of information selected in the selecting.

2. The communication method according to claim 1, further comprising:
acquiring selection information provided from the network,
wherein the selection information is information regarding whether the higher layer information is prioritized over the broadcast information, and
the selecting comprises selecting any one piece of information of the broadcast information or the higher layer information, based on the selection information.

3. The communication method according to claim 2, wherein
the acquiring of the selection information comprises receiving the selection information broadcast from the network.

4. The communication method according to claim 2, wherein
the acquiring of the selection information comprises acquiring the selection information contained in the higher layer information.

5. The communication method according to claim 1, further comprising:
determining whether the network provides the broadcast information,
wherein the selecting comprises selecting the one piece of information, based on a determination result of the determining.

6. The communication method according to claim 5, wherein
the selecting comprises selecting the higher layer information as the one piece of information, when the determining determines that the network does not provide the broadcast information.

7. The communication method according to claim 5, wherein
the selecting comprises selecting the broadcast information as the one piece of information, when the determining determines that the network provides the broadcast information.

8. A communication method performed by a user equipment in a radio resource control (RRC) idle state or an RRC inactive state in a mobile communication system configured to support a multicast and broadcast service (MBS), the communication method comprising:
receiving system information (SI) scheduling information broadcast by a neighboring cell belonging to a desired MBS frequency associated with a desired MBS service; and
prioritizing the desired MBS frequency over other frequencies in the cell reselection procedure, when the SI scheduling information indicates that the neighboring cell has a capability of providing an MBS system information block.

9. The communication method according to claim 8, wherein
the prioritizing comprises prioritizing the desired MBS frequency over other frequencies in the cell reselection procedure, even when the neighboring cell does not provide the MBS system information block but the SI scheduling information indicates that the neighboring cell has the capability.

10. A communication method performed by a user equipment in a radio resource control (RRC) idle state or an RRC inactive state in a mobile communication system configured to support a multicast and broadcast service (MBS), the communication method comprising:
specifying at least one cell belonging to a desired MBS frequency associated with a desired MBS service, where a result of measurement on the at least one cell satisfies a predetermined criterion; and
prioritizing the desired MBS frequency over other frequencies in a cell reselection procedure, when a user equipment determines that the specified cell provides an MBS system information block.

11. A communication method performed by a user equipment in a radio resource control (RRC) idle state or an RRC inactive state in a mobile communication system configured to support a multicast and broadcast service (MBS), the communication method comprising:
prioritizing, when a user equipment determines that at least one cell belonging to a desired MBS frequency associated with a desired MBS service provides an MBS system information block, the desired MBS frequency over other frequencies in a cell reselection procedure;
specifying a candidate cell from the desired MBS frequency, based on a result of measurement on the desired MBS frequency; and
reselecting the candidate cell when the at least one cell comprises the specified candidate cell.

12. The communication method according to claim 11, further comprising:
determining, when the at least one cell does not comprise the specified candidate cell, whether the candidate cell provides the MBS system information block; and
reselecting the candidate cell when the determining determines that the candidate cell provides the MBS system information block.

13. A communication method performed by a user equipment in a radio resource control (RRC) idle state or an RRC inactive state in a mobile communication system configured to support a multicast and broadcast service (MBS), the communication method comprising:
reselecting a cell belonging to a desired MBS frequency associated with a desired MBS service, by prioritizing the desired MBS frequency over other frequencies in a cell reselection procedure;
determining whether the cell provides the desired MBS service, based on a multicast control channel transmitted from the cell; and
re-performing the cell reselection procedure when the determining determines that the cell does not provide the desired MBS service.

14. The communication method according to claim 13, wherein
the re-performing comprises ceasing to consider the desired MBS frequency as the prioritized frequency.

15. A communication method performed by a user equipment in a radio resource control (RRC) idle state or an RRC inactive state in a mobile communication system configured to support a multicast and broadcast service (MBS), the communication method comprising:
receiving system information comprising information broadcast by a neighboring cell belonging to a desired MBS frequency associated with a desired MBS service, the information being regarding whether MBS service provision in the neighboring cell is restricted; and
prioritizing the desired MBS frequency over other frequencies in a cell reselection procedure in response to the system information indicating that the MBS service provision is not restricted,
wherein the system information is a system information block type 1 or a master information block.
